# EUROPEAN PATENT APPLICATION

(11) **EP 4 175 092 A1**
(43) Date of publication of application: **03.05.2023**
(21) Application number: 21828632.6
(22) Date of filing: 24.03.2021
(51) Int. Cl.: H02H 3/06, H02J 1/00, H02J 3/36, H02J 3/38

(54) **PROTECTION CONTROL DEVICE FOR MULTI-TERMINAL DC POWER TRANSMISSION SYSTEM**

(30) Priority: 26.06.2020 JP 2020110265
(71) Applicant: Hitachi, Ltd., Tokyo 100-8280 (JP)
(72) Inventor: YOSHIHARA, Tohru, Tokyo 100-8280 (JP); OHARA, Shinya, Tokyo 100-8280 (JP); LEE Chia, Tse, Tokyo 100-8280 (JP); HARAGUCHI, Ruriko, Tokyo 100-8280 (JP)
(74) Representative: MERH-IP Matias Erny Reichl Hoffmann Patentanwälte PartG mbB
(86) International application number: PCT/JP2021/012278
(87) International publication number: WO 2021/261041

(57) **Abstract**

Provided is a protection control device for a multi-terminal DC power transmission system that can avoid the shutdown of a renewable energy power plant as much as possible, appropriately separate the section of a DC accident that has occurred in the DC line of the multi-terminal DC power transmission system, and continue the operation of the entire system. In the protection control device for the multi-terminal DC power transmission system, a wind farm conversion station equipped with an AC/DC converter that converts power of a wind farm from AC to DC is connected to another AC/DC conversion station via a plurality of DC lines including a DC circuit breaker. The protection control device has a function of suppressing power flowing into the DC line from the AC/DC conversion station to which the wind farm is connected in a case where an accident occurs in the DC line.

## Description

### Technical Field

The present invention relates to a protection control device for a multi-terminal DC power transmission system in which a power generation system such as a renewable energy power source is connected via a power converter and a DC transmission line.

### Background Art

A high voltage direct current (HVDC) is used for high efficiency of long-distance power transmission and submarine power transmission. Since a general power system is an AC system, in a DC power transmission system, the power of the AC system is converted into DC by an AC/DC converter and transmitted.

In the old days, the AC/DC converter used in the DC power transmission system was mainly a separately excited AC/DC converter using a thyristor, but in recent years, a self-excited AC/DC converter using an insulated gate bipolar transistor (IGBT) is increasingly introduced.

The AC/DC converter used in a self-excited DC power transmission system has few harmonics, and the number of cases where modular multilevel converters (MMCs) are applied as a method suitable for large capacity and high voltage is increasing.

In addition, as a power transmission type of a DC power transmission system, a one-to-one power transmission type that connects two points on a one-to-one basis has been the mainstream in the past, but in recent years, the scale and capacity of the DC power transmission system has been increasing, and a so-called multi-terminal DC power transmission system in which three or more points are connected as a power transmission type is drawing attention. One of the operational issues of the multi-terminal DC power transmission system is the continuation of operation of the entire system in the event of a DC line accident.

The basic idea of continuing operation of the entire system is the same as that of the conventional AC system, in which the accident section is separated and the operation is continued in the remaining sound part. In this regard, unlike the AC system, the multi-terminal DC power transmission system interconnects via an AC/DC converter, but it is required that the control by the AC/DC converter be restored promptly after self-removal. Further, in order to protect the overcurrent/overvoltage of the AC/DC converter and prevent the accident from spreading, it is generally desired that the accident section can be separated and the operation can be continued with the remaining system within a few ms from the occurrence of the accident.

PTL 1, for example, is known as a method for eliminating DC accidents and continuing operation of the system in a multi-terminal DC power transmission system. In PTL 1, "Each switch is installed to separate a power transmission path into sections, a detection unit detects an accident, and a control unit controls switching of the switch based on a detection result of the detection unit. The control unit operates the switch to disconnect the accident section from the DC power transmission path when the detection unit detects an accident, turns on one switch among the switches disconnected after the disconnection operation, re-disconnects the one switch which has been turned on when the detection unit continuously detects an accident after the one switch is turned on, and recovers the accident section by return all the switches, which have been disconnected in order to separate the accident section from the DC power transmission path, to a closed state if the detection unit continuously detects an accident after the one switch is turned on".

### Citation List

### Patent Literature

PTL 1: JP 6517589 B1

### Summary of Invention

### Technical Problem

On the other hand, in the protection of a multi-terminal DC power transmission system, a switch that originally does not need to be opened to eliminate an accident opens and closes by mistake due to a setting error of an accident detection unit or a communication error between the accident detection unit and the opening/closing unit. Hereinafter, in the present specification, "a switch or a circuit breaker that does not need to be opened for accident elimination accidentally opens and closes" is referred to as "malfunction".

A malfunction of the switch causes unnecessary separation of the DC system of the multi-terminal DC power transmission system, which can lead to an expansion of the accident section and, in the worst case, a total shutdown of the system. In particular, when a renewable energy power plant such as a wind farm is connected to at least one end of the multi-terminal DC power transmission system, a malfunction of the switch causes the renewable energy power plant to be separated from the multi-terminal DC power transmission system, and there is a possibility that the operation will be stopped due to the detection of the independent operation state of the renewable energy power plant.

In this case, it may take time for the restoration process to restart the power plant that has been once stopped, and even if the accident line in the DC system of the multi-terminal DC power transmission system is disconnected, the transmission system is restored, it is not possible to promptly resume transmission of power from the renewable energy power plant.

Therefore, in a DC power transmission system in which a renewable energy power plant is connected to at least one end of the multi-terminal DC power transmission system, it is desirable that the operation shutdown of the renewable energy power plant is avoided as much as possible even if the switch malfunctions, the section of the DC accident occurred on the DC line of the multi-terminal DC power transmission system is appropriately separated, and the operation of the entire system can continue. PTL 1 does not mention the problems and solutions when the switch malfunction and the renewable energy power plant are connected as described above.

From the above, an object of the invention is to provide a protection control device for a multi-terminal DC power transmission system that can avoid the shutdown of a renewable energy power plant as much as possible, appropriately separate the section of a DC accident that has occurred in the DC line of the multi-terminal DC power transmission system, and continue the operation of the entire system.

### Solution to Problem

From the above, in the invention, there is provided "a protection control device for a multi-terminal DC power transmission system, in which a wind farm conversion station equipped with an AC/DC converter that converts power of a wind farm from AC to DC is connected to another AC/DC conversion station via a plurality of DC lines including a DC circuit breaker. The protection control device has a function of suppressing power flowing into the DC line from the AC/DC conversion station to which the wind farm is connected in a case where an accident occurs in the DC line".

Further, in the invention, there is provided "a protection control device for a multi-terminal DC power transmission system in which a wind farm conversion station equipped with an AC/DC converter that converts power of a wind farm from AC into DC is connected to another AC/DC conversion station via a plurality of DC lines including a DC circuit breaker, wherein, when it is detected that a DC accident has occurred in a part of the plurality of DC lines and all of the plurality of DC circuit breakers in the wind farm conversion station are in an open state, and all the DC circuit breakers are in an open state, the DC circuit breaker of the DC line on a side where the DC accident does not occurred is turned on again".

### Advantageous Effects of Invention

According to the invention, when a DC accident occurs, the power transmitted from the renewable energy power generation device to the multi-terminal DC power transmission system is suppressed. Therefore, even when the accident section is separated to eliminate the DC accident, it is possible to avoid the shutdown of the renewable energy power generation device and the AC/DC conversion station to which the renewable energy power generation device is connected, and the operation in the healthy part can continue as much as possible.

### Brief Description of Drawings

[FIG. 1] FIG. 1 is a diagram illustrating a configuration example of a multi-terminal DC power transmission system and a control device thereof according to an embodiment of the invention.
[FIG. 2] FIG. 2 is a diagram illustrating an accident state of the multi-terminal DC power transmission system.
[FIG. 3] FIG. 3 is a diagram illustrating an operation flow of a protection control device of the multi-terminal DC power transmission system according to an embodiment of the invention.
[FIG. 4] FIG. 4 is a diagram illustrating a simple circuit configuration of a wind farm conversion station and a wind farm in a situation where the wind farm conversion station is separated.
[FIG. 5] FIG. 5 is a diagram illustrating the concept of change in DC voltage Vdc when an active power Pac is changed in a case where the braking chopper is not used.
[FIG. 6] FIG. 6 is a diagram illustrating the concept of changes in the DC voltage Vdc and temperature of the braking chopper in a case where the braking chopper is used.
[FIG. 7] FIG. 7 is a diagram illustrating a simple circuit of the wind farm conversion station and the wind farm in a situation where the wind farm conversion station is separated.
[FIG. 8] FIG. 8 is a diagram illustrating the concept of temporal change of DC voltage Vac, AC current Iac, and active power Pac when a method of lowering the output AC voltage of the wind farm conversion station is performed.

### Description of Embodiments

Hereinafter, embodiments of the invention will be described using the drawings. The following embodiment shows one mode of the invention, and the invention includes other modes as long as the gist is not deviated.

In the following explanation, unless otherwise specified, "alternating current (AC)" refers to three-phase alternating current. An AC/DC converter refers to a self-excited AC/DC converter that converts three-phase AC to DC, and the part of the AC/DC converter that is connected to the three-phase AC is called "AC side" and the part connected to a DC circuit is called "DC side". The dotted arrow line in the drawings means "communication of detection signal and command signal".

In addition, for simplification of explanation, values such as voltage and electric power will be described using numerical values. All voltage values are expressed in arbitrary units, and the unit is [a.u.]. The numerical values are used to show an example of the embodiment of the invention, and the numerical values are not limited to the embodiments of the invention.

Further, regarding the description of the following drawings, in order to show the turned-on and open states of a DC circuit breaker, the circuit breaker in the closed state is illustrated in black and the circuit breaker in the open state is illustrated in white.

### [Embodiments]

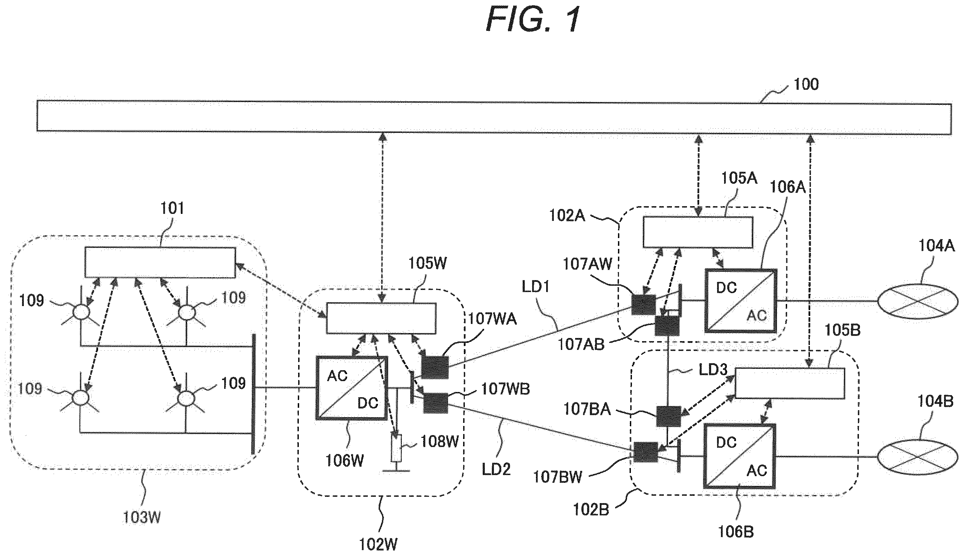

Hereinafter, embodiments of the invention will be described using FIGS. 1 to 8. FIG. 1 is a configuration example of a multi-terminal DC power transmission system and a control device thereof according to an embodiment of the invention.

FIG. 1 illustrates the configuration of a power system and a control device thereof. The power system has a multi-terminal DC power transmission system configured by connecting a wind farm conversion station 102W, an AC system connection conversion station 102A, and an AC system connection conversion station 102B to each other via a DC transmission line LD (LD1, LD2, LD3). The AC side of each of the conversion stations 102W, 102A, and 102B is electrically connected to a wind farm 103W, an AC system 104A, and an AC system 104B, respectively.

The conversion stations 102W, 102A, and 102B each have almost the same configuration except that a braking chopper 108W is additionally installed in the wind farm conversion station 102W, and an AC/DC converter 106 (106W, 106A, 106B) and a DC circuit breaker 107 (107WA, 107WB, 107AW, 107AB, 107BA, 107BW) are included. The symbols W, A, and B attached to the AC/DC converter 106 and the DC circuit breaker 107 are to distinguish the conversion stations, and the twodigit symbols W, A, and B attached to the DC circuit breaker 107 show a connection relationship between the self-end and the mating end of the DC transmission line by describing the self-conversion station in front and the mating end conversion station in the back.

The braking chopper 108W is also installed at the wind farm conversion station 102W. Here, the braking chopper 108W is, for example, a series circuit of a switch and a resistor, ground-connected to the DC line between the AC/DC converter 106W and the internal bus, and has a function of switching power consumed by the braking chopper 108W by turning on and off the switch in response to a command from the control device 108W described later and switching a resistance-on state and a resistance-open state.

The wind farm 103W is composed of a plurality of wind power plants 109, and FIG. 1 illustrates an example of the wind farm being composed of four wind power plants 109.

The above is the power system configuration of the multi-terminal DC power transmission system illustrated in FIG. 1. On the other hand, the control device of the power system is configured by an overall control device 100 that controls all the conversion stations, an individual control device 105 (105W, 105A, 105B), and a wind farm control device 101 that controls the wind farm 103W. In addition, various signals are transmitted and received by mutual communication between the overall control device 100 and the individual control device 105 (105W, 105A, 105B), and mutual communication is also formed between the individual control device 105W and the wind farm control device 101.

As a result, the states of the conversion stations 102W, 102A, and 102B including the state of the wind farm 103W is grasped by the overall control device 100, and the conversion stations 102W, 102A, and 102B including the wind farm 103W are controlled by a control command from the overall control device 100. The control targets of the individual control device 105 (105W, 105A, 105B) are the AC/DC converter 106 and the DC circuit breaker 107 in the station, and a switch opening/closing operation of the braking chopper 108W is further performed in the wind farm conversion station 102W. The wind farm control device 101 controls the plurality of wind power plants 109 in the wind farm.

As mentioned earlier, in FIG. 1 and the like, the DC circuit breaker 107 (107WA, 107WB, 107AW, 107AB, 107BA, 107BW) is shown in white when it is open and in black when it is turned on. Therefore, FIG. 1 illustrates that the power system is in a healthy state and all DC circuit breakers 107 (107WA, 107WB, 107AW, 107AB, 107BA, 107BW) are in the closed state.

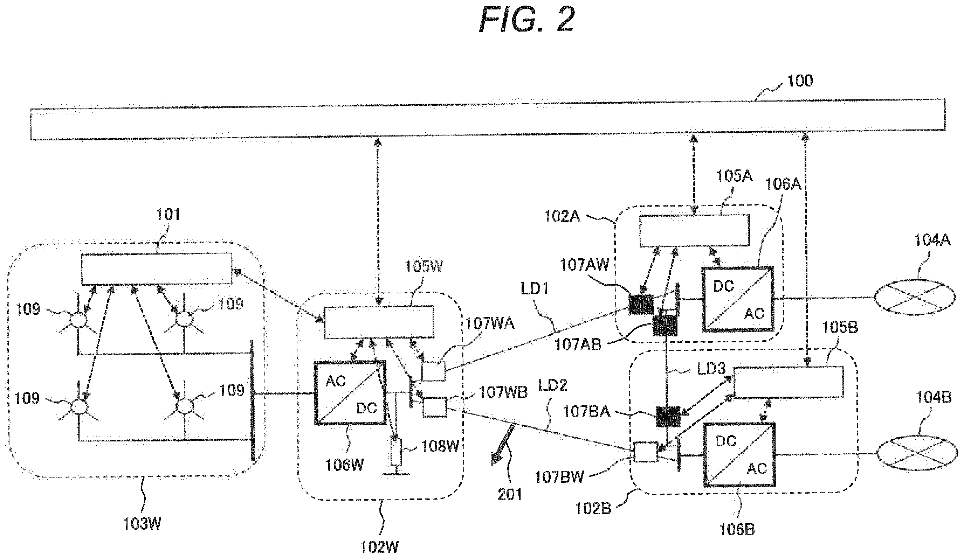

On the other hand, FIG. 2 illustrates a state in which a DC accident 201 has occurred on a DC transmission line LD2. In this state, the DC circuit breakers 107WB and 107BW at both ends of the DC transmission line LD2 are opened by detecting, for example, an accident on the DC line from a DC voltage drop, and the other DC circuit breaker 107WA of the wind farm conversion station 102W is also opened by detecting the influence of the DC voltage drop. The DC circuit breaker 107WA is not opened originally, but is based on a malfunction. As a result, the wind farm conversion station 102W is in a state where it cannot transmit the power corresponding to the power generated by the wind farm 103W to the DC side.

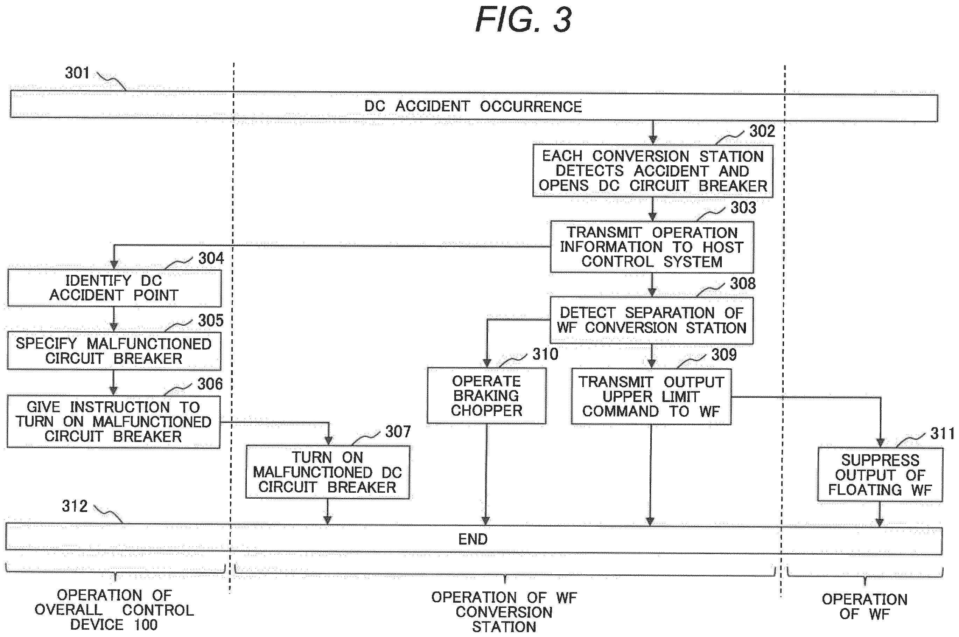

FIG. 3 is a diagram illustrating an operation flow of the protection control device of the multi-terminal DC power transmission system according to the embodiment of the invention. This drawing illustrates the flow of processing in the event of a DC accident in FIG. 2 as a flow of timeseries processing from top to bottom. Further, from the left side, the operation contents of the overall control device 100, the operation contents of the wind farm conversion station 102W, and the operation contents of the wind farm 103W are described in order. In FIG. 3, the wind farm is abbreviated as WF.

In the following description, in the embodiment of the invention, a case where a DC accident occurs at an accident point 201 and the DC circuit breaker 107WA is opened due to a malfunction will be described as an example timesequentially in combination with the operation flow of FIG. 3.

First, the operation immediately after the occurrence of the DC accident at the accident point 201 and the operation of the DC circuit breaker 107 will be described. In Step 301 of FIG. 3, a DC accident has occurred at the accident point 201 of the DC transmission line LD2. At this time, an accident current flows from each of the conversion stations 102W, 102A, and 102B toward the accident point.

In Step 302, each of the AC/DC conversion stations 102W, 102A, and 102B opens the DC circuit breaker in order to open the DC accident line LD2 based on the information that can be detected at the conversion station's own end, such as the current and voltage flowing through the LD (LD1, LD2, LD3). In this case, the conversion stations 102W and 102B on both sides of the DC transmission line LD2 including the accident point 201 detect the accident, and the DC circuit breakers 107WB and 107BW at both ends of the DC transmission line LD2 are opened.

Up to this point, the correct protection operation is performed when a DC accident occurs on the DC transmission line LD2. Ideally, for a DC accident that occurs in the DC transmission line LD2, only the DC circuit breaker 107BW and the DC circuit breaker 107WB, which are the circuit breakers at both ends of the DC transmission line LD2 at the accident point 201, need to be opened. On the other hand, here, in addition to the above two DC circuit breakers 107BW and 107WB, it is assumed that the DC circuit breaker 107WA in the wind farm conversion station 102W has been opened due to a malfunction.

In Step 303, each of the conversion stations 102W, 102A, and 102B transmits the open/closed state of the DC circuit breaker of its own station and the current and voltage information of the DC transmission line to the overall control device 101. In this case, the conversion stations 102W and 102B report the accident detection on the DC transmission line LD2 and the opened DC circuit breaker 107. The opened DC circuit breaker 107 reported by the wind farm conversion station 102W at this time includes the DC circuit breaker 107WA opened due to a malfunction.

Hereinafter, first, the operation performed by the overall control device 100 will be described. First, in Step 304, it is identified in which DC transmission line the accident occurs based on the open/closed state of the DC circuit breaker transmitted from each of the conversion stations 102W, 102A, and 102B by transmitting the information to the overall control device 100, and the current and voltage information of the DC transmission line LD (LD1, LD2, LD3). As a method for identifying an accident transmission line, for example, a method for identifying an accident point using information at both ends of the transmission line, such as a current differential method, can be mentioned. Here, it is assumed that the accident has occurred at the accident point 201 by an identification process at the DC accident point.

In Step 305, the malfunctioning DC circuit breaker is identified from the accident point information identified in Step 304 of identifying a DC accident point and the open/closed state of the DC circuit breaker transmitted from each conversion station. Here, in Step 304 of identifying a DC accident point, it is possible to identify that an accident has occurred at the accident point 201. Ideally, it is known in advance that only the DC circuit breaker 107BW and the DC circuit breaker 107WB, which are the circuit breakers at both ends of the DC transmission line of the accident point 201, need to be opened when a DC accident occurs at the accident point 201. Therefore, the DC circuit breaker causing a malfunction can be identified as the DC circuit breaker 107WA.

In Step 306, the overall control device 100 issues a command to each conversion station to turn on the DC circuit breaker 107WB, in which a malfunction has been found, again. In this example, a command is issued to the wind farm conversion station 102W to turn on the DC circuit breaker 107WA again.

The above is the description of the operation performed by the overall control device 100 in the embodiment of the invention. Note that a time delay of several hundred ms to several seconds occurs in the transmission/reception of operation information of each of the conversion stations 102W, 102A, and 102B, the identification of the DC accident point in the overall control device 100, the identification of a malfunctioning DC circuit breaker, and the like. However, regarding how much time delay occurs, for example, issuing a command to each of the conversion stations 102W, 102A, and 102B within a maximum time after the DC accident is detected by the overall control device 100 may be set in advance as an operation rule of the overall control device 100 and each of the conversion stations 102W, 102A, and 102B. Therefore, it is possible for the conversion stations 102W, 102A, and 102B to grasp how long each of the conversion stations 102W, 102A, and 102B can be autonomously controlled until the command arrives from the overall control device 100.

Next, the operation flow of the wind farm conversion station and the wind farm in the embodiment of the invention will be described. In Step 308, it is determined whether the wind farm conversion station is separated from the multi-terminal DC power transmission system based on the open/closed state of the DC circuit breaker 107 of the own conversion station. In this example, since both the DC circuit breaker 107WA and the DC circuit breaker 107WB are in the open state, it can be determined that the wind farm conversion station 102W is separated from the multi-terminal DC power transmission system.

In the state that the wind farm conversion station 102W is separated from the multi-terminal DC power transmission system, the power transmitted from the wind farm 103W to the wind farm conversion station 102W is accumulated in the wind farm conversion station 102W, and eventually the wind farm conversion station 102W may be shut down due to the electrical and thermal constraints of the conversion station.

Therefore, in the embodiment of the invention, the process of Step 309 (output upper limit command to the wind farm conversion station 102W) for suppressing the power transmitted from the wind farm 103W and the process of Step 310 (braking chopper operation) for consuming the power accumulated in the wind farm conversion station 102W are carried out in order to extend the time until the operation of the wind farm conversion station 102W is stopped as much as possible.

In the process of Step 309 for suppressing the power transmitted from the wind farm 103W, the output upper limit to the wind farm 103W is determined based on how long each conversion station needs to continue the operation only by autonomous control until the command arrives from the overall control device 100 after the DC accident 201 occurs. As a method of determining the output upper limit value to the wind farm 103W, for example, a method of determining the output upper limit to avoid the DC overvoltage of the wind farm conversion station can be considered.

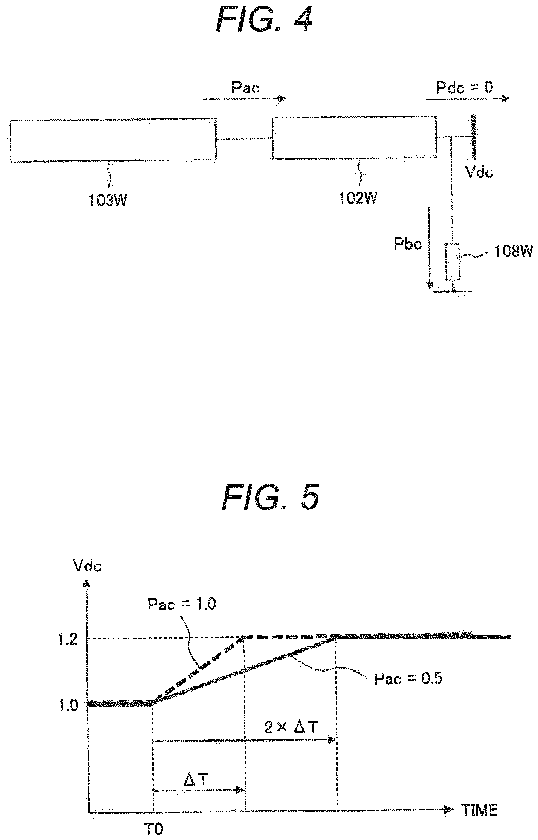

FIGS. 4 and 5 are diagrams for explaining a conceptual diagram of a method of determining an output upper limit value. FIG. 4 is a simple circuit diagram of the wind farm conversion station and the wind farm in a situation where the wind farm conversion station is separated. In FIG. 4, the active power transmitted from the wind farm 103W to the wind farm conversion station 102W is referred to as Pac, and the active power transmitted from the wind farm conversion station 102W to the DC transmission line LD2 is referred to as Pdc, the power consumption of the braking chopper 108W is referred to as Pbc, and the DC voltage on the DC side of the wind farm conversion station 102W is referred to as Vdc. Pdc is 0.0 [a.u.] because the wind farm conversion station 102W is separated in the accident continuation state.

FIG. 5 is a diagram illustrating a concept of the change in the DC voltage Vdc on the DC side of the wind farm conversion station 102W when the active power Pac transmitted from the wind farm 103W to the wind farm conversion station 102W is changed without using the braking chopper 108W. The vertical axis of FIG. 5 is the DC voltage Vdc [a.u.], and the horizontal axis is time.

In the explanation of FIG. 5, the steady state value of the DC voltage Vdc is 1.0 [a.u.], the overvoltage upper limit value of the wind farm conversion station 102W is 1.2 [a.u.], and the time when the wind farm conversion station 102W is separated from the multi-terminal DC power transmission system is T0.

When the wind farm conversion station 102W is separated from the multi-terminal DC power transmission system at time T0, energy is accumulated by the capacitor on the DC side and the floating capacitance of the DC transmission line due to the inflow of active power Pac, so the DC voltage Vdc rise. The slope of the rise of the DC voltage Vdc at this time is determined by the magnitude of the active power Pac, and the larger the active power Pac, the larger the slope. In other words, the slope of the rise of the DC voltage Vdc can be lowered by lowering the active power Pac.

In FIG. 5, an example of active power Pac = 1.0 [a.u.] is drawn by a dotted line, and an example of active power Pac = 0.5 [a.u.] is drawn by a solid line. The value of the DC voltage Vdc after the wind farm conversion station 102W is separated is roughly determined by the size of the active power Pac and the time product of the separation time, so if the active power Pac is halved, the time that the wind farm conversion station 102W reaches the overvoltage upper limit value will be almost doubled.

Therefore, in the embodiment of the invention, when a DC accident occurs and the time taken for a command to be received from the overall control device 100 is ΔTth, the upper limit value of the active power Pac may be determined such that the time ΔT taken for the DC voltage Vdc to rise from 1.0 [a.u.] to 1.2 [a.u.] becomes longer than ΔTth. The above is the description of the method of determining the output upper limit command value to the wind farm conversion station 102W by the process of Step 309.

Further, as in the embodiment of the invention, it is preferable to also perform the braking chopper operation, which is the process of Step 310 for consuming the electric power accumulated in the wind farm conversion station 102W. When the wind farm conversion station 102W is equipped with the braking chopper 108W, the energy accumulated on the DC side can be consumed by operating the braking chopper 108W and turning on the braking chopper 108W when the DC voltage Vdc rises, so that the slope of the voltage Vdc can be reduced.

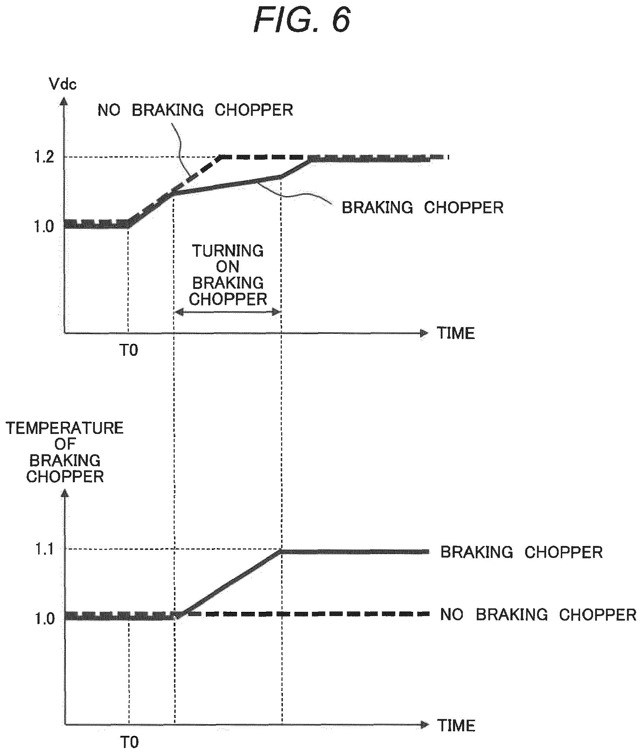

FIG. 6 is a diagram illustrating a change in the DC voltage Vdc when the braking chopper 108W is used in the upper part of FIG. 6 and a change in the temperature of the braking chopper 108W at the same time in the lower part of FIG. 6.

During a period when the braking chopper 108W is turned on, the braking chopper 108W consumes electric power, so that the rise in the DC voltage Vdc is suppressed, while the temperature rises due to the heat generated by the braking chopper 108W. For example, if the upper limit value of the braking chopper DC voltage is 1.1 [a.u.], the rise of the DC voltage Vdc can be suppressed by applying the braking chopper DC voltage until the temperature of the braking chopper reaches the upper limit.

The above is the description of the principle of suppressing the rise speed of the DC voltage Vdc due to the turning-ON of the braking chopper 108W in the embodiment of the invention. Since the power consumption of the braking chopper is determined by the resistance value and the DC voltage, the active power Pac when the braking chopper 108W is equipped can be determined by the same idea by calculating the time ΔT taken for the DC voltage Vdc to rise from 1.0 [a.u.] to 1.2 [a.u.] in consideration of the operation of the braking chopper 108W.

It should be noted that the suppression of the rising speed of the DC voltage Vdc by setting the output upper limit value of the active power Pac and the suppression of the rising speed of the DC voltage Vdc by the braking chopper can be used in combination. Further, in this explanation, the method of determining the upper limit value of the active power Pac is described by taking DC overvoltage as an example, but it is possible to determine the upper limit value of the active power Pac based on the same idea even in a case where the constraint depending on the time product of the active power Pac such as the thermal constraint of the conversion station is considered.

The above has described the output upper limit command to the wind farm 103W for suppressing the power transmitted from the wind farm 103W, and the operation of the braking chopper 108W for consuming the power accumulated in the wind farm conversion station 102W.

Finally, in Step 311, the output of the wind farm 103W is suppressed based on the upper limit value of the active power Pac calculated by the output upper limit command to the wind farm 103W.

The above is an explanation of the operation flow for turning on the malfunctioning DC circuit breaker again, while avoiding the shutdown of the wind farm conversion station, by suppressing the output of the wind farm even if the DC circuit breaker malfunctions when a DC accident occurs. Finally, in Step 312, a series of operation flows is completed.

The above has described about the measures to be taken when a DC accident occurs at the accident point 201 and the DC circuit breaker 107WA is opened due to a malfunction. In the embodiment of the invention, the method of using the output suppression command of the wind farm 103W and the method of utilizing the braking chopper 108W have been described in order to suppress the power flowing into the DC transmission line from the wind farm 103W. The invention can also be realized even in a method of lowering the output AC voltage of the wind farm conversion station 102W.

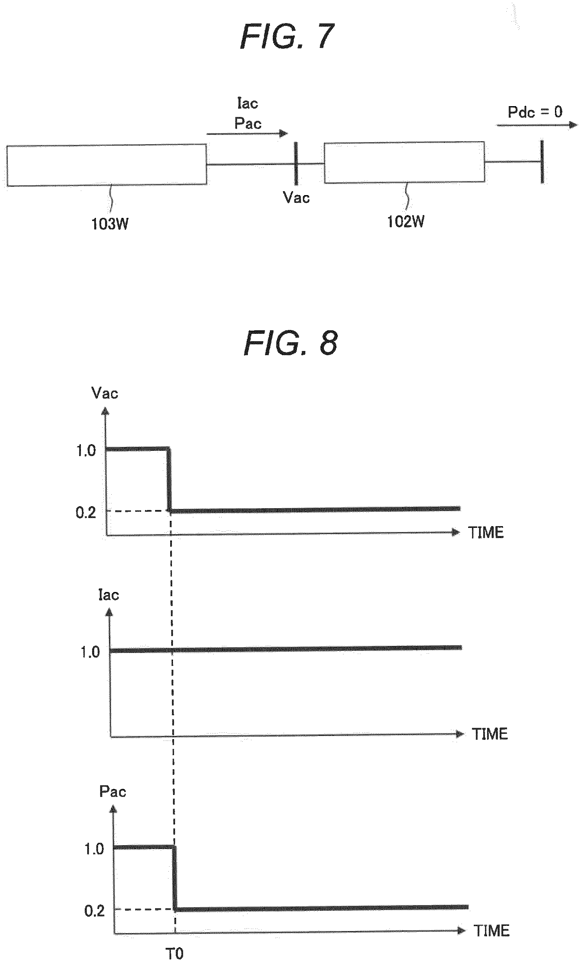

FIG. 7 is a simple circuit diagram of the wind farm conversion station 102W and the wind farm 103W in a situation where the wind farm conversion station 102W is separated. In FIG. 7, the voltage on the AC side of the wind farm conversion station 102W is referred to as Vac, the AC current transmitted to the wind farm conversion station 102W is referred to as Iac, the active power transmitted to the wind farm conversion station 102W is referred to as Pac, and the active power transmitted from the wind farm conversion station 102W to the DC transmission line is referred to as Pdc. When the power factor of the power transmitted to the wind farm conversion station 102W is 1, the active power Pac is the product of the AC side voltage Vac and the AC current Iac.

FIG. 8 is a conceptual diagram of temporal change of the AC voltage Vac, the AC current Iac, and the active power Pac when the method of lowering the output AC voltage Vac of the wind farm conversion station 102W is performed at time T0. According to this, the wind farm 103W is operated so as to keep the AC current Iac constant, and the active power Pac can be lowered by controlling so as to lower the DC voltage Vac in the wind farm conversion station.

Unlike the method using the output suppression command of the wind farm, communication between the wind farm and the wind farm conversion station is not required while the wind farm conversion station is separated.

### Reference Signs List

10 overall control device
102A,102B AC system connection conversion station
102W wind farm conversion station
103W wind farm
104A,104B AC system
105A,103B,103W individual control device
106A,106B,106W AC/DC converter
107AB,107AW,107BA,107BW,107WA,107WB DC circuit breaker
108W braking chopper
109 wind power generator
201 accident point
301 DC accident occurs
302 open DC circuit breaker
303 transmit information to overall control device
304 identify DC accident point
305 identify malfunctioning circuit breaker
306 give an instruction to turn on circuit breaker
307 turn on circuit breaker
308 detect separation of wind farm conversion station
309 give output upper limit command to wind farm
310 operate braking chopper
311 suppress output of wind farm
312 end

## Claims

1. A protection control device for a multi-terminal DC power transmission system in which a wind farm conversion station equipped with an AC/DC converter that converts power of a wind farm from AC to DC is connected to another AC/DC conversion station via a plurality of DC lines including a DC circuit breaker,
wherein the protection control device has a function of suppressing power flowing into the DC line from the AC/DC conversion station to which the wind farm is connected in a case where an accident occurs in the DC line.

2. The protection control device for the multi-terminal DC power transmission system according to claim 1,
wherein the function of suppressing the power is a function of suppressing power generated by the wind farm.

3. The protection control device for the multi-terminal DC power transmission system according to claim 1,
wherein the function of suppressing the power is a function in which connection to the ground is established from between the AC/DC converter and the DC line via a braking chopper to consume power, and the power flowing from the AC/DC conversion station to the DC line is suppressed.

4. The protection control device for the multi-terminal DC power transmission system according to claim 1,
wherein a time for suppressing the power flowing into the DC line from the AC/DC conversion station to which the wind farm is connected is calculated from an electrical capacity or a thermal capacity of the AC/DC conversion station.

5. The protection control device for the multi-terminal DC power transmission system according to claim 3,
wherein power flowing into the DC line from the AC/DC conversion station to which the wind farm is connected is suppressed within a range not exceeding a thermal capacity of the braking chopper.

6. The protection control device for the multi-terminal DC power transmission system according to claim 2,
wherein an output upper limit value of the wind farm is calculated so as not to exceed an electrical capacity or a thermal capacity of the AC/DC conversion station to which the wind farm is connected, and an output suppression operation of the wind farm is performed.

7. The protection control device for the multi-terminal DC power transmission system according to claim 1,
wherein an output AC voltage of the AC/DC conversion station to which the wind farm is connected is lowered so as not to exceed an electrical capacity or a thermal capacity of the AC/DC conversion station to which the wind farm is connected.

8. A protection control device for a multi-terminal DC power transmission system in which a wind farm conversion station equipped with an AC/DC converter that converts power of a wind farm from AC into DC is connected to another AC/DC conversion station via a plurality of DC lines including a DC circuit breaker,
wherein, when it is detected that a DC accident has occurred in a part of the plurality of DC lines and all of the plurality of DC circuit breakers in the wind farm conversion station are in an open state, and all the DC circuit breakers are in an open state, the DC circuit breaker of the DC line on a side where the DC accident does not occurred is turned on again.

9. The protection control device for the multi-terminal DC power transmission system according to claim 8,
wherein power of the wind farm is controlled to be suppressed when a DC accident occurs in a part of the DC line.

10. The protection control device for the multi-terminal DC power transmission system according to claim 8,
wherein the wind farm conversion station is connected to the ground from between the AC/DC converter and the DC line via a braking chopper, and the braking chopper is connected to the ground by detecting that all of a plurality of the DC circuit breakers are in an open state.
